(19) Europäisches Patentamt / European Patent Office / Office européen des brevets

(11) **EP 2 039 539 A1**

(12) **EUROPÄISCHE PATENTANMELDUNG**

(43) Veröffentlichungstag:
**25.03.2009   Patentblatt 2009/13**

(51) Int Cl.:
***B60C 23/04*** *(2006.01)*

(21) Anmeldenummer: **08105362.1**

(22) Anmeldetag: **17.09.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **18.09.2007   DE 102007044396**

(71) Anmelder: **Continental Automotive GmbH**
**30165 Hannover (DE)**

(72) Erfinder:
• **Gila, Janos, Dr.**
 **2340 Mödling (AT)**
• **Pohl, Alfred**
 **2130 Mistelbach (AT)**
• **Tschofen, Robert**
 **1140 Wien (AT)**

(54)    **Verfahren und Vorrichtung zur Zuordnung eines Rads eines Kraftfahrzeugs**

(57)    Die Erfindung betrifft in einem ersten Aspekt ein Verfahren zur Zuordnung eines Fahrzeugrads (1) zu Achsen mit unterschiedlichen Radgrößen mit folgenden Verfahrensschritten:

- Messung der Beschleunigung $a_r$, die ein Beschleunigungssensor einer Radelektronik (3) in einem Rad (1) erfährt,

- Übermittlung des gemessenen Beschleunigungswerts $a_r$ an eine Auswerteeinheit,

- Vergleich des gemessenen Beschleunigungswerts $a_r$ mit einem für ein Standardrad in einem Speicher hinterlegten Standardwert durch die Auswerteeinheit; und

- Zuordnung des Fahrzeugrads (1) zu einer Achse durch die Auswerteeinheit in Abhängigkeit von dem Vergleichsergebnis.

Die vorliegende Erfindung eignet sich besonders für die Bestimmung von Liftachsen für LKWs.

FIG 3

**Beschreibung**

Die Erfindung betrifft ein Verfahren und eine Vorrichtung zur Zuordnung eines Rads eines Kraftfahrzeugs.

Eine Funktion von Raddruckkontrollsystemen ist die automatische Lokalisierung der einzelnen Räder. Diese Funktion wird eingesetzt, um die Position eines Rads bzw. der in dem Rad verbauten Radelektronik automatisch festzustellen. Dadurch wird dem Fahrer die Anzeige von Warnungen bezüglich eines Rads ermöglicht, die direkt mit der entsprechenden Radposition gekoppelt sind. Bei der Lokalisierung wird zwischen der vollständigen Lokalisierung (Position aller vier Räder), der Achslokalisierung (vorne/hinten) sowie der Seitenlokalisierung (rechts/links) unterschieden.

Ein Ansatz zur Achslokalisierung beinhaltet die Messung von Signalintensitäten, die von Radelektroniken verschiedener Achsen ausgesendet werden und durch eine Antenne, die asymmetrisch zu den Achsen angeordnet ist, empfangen werden. Alternativ kann die Radposition direkt von der Radelektronik ermittelt werden; entweder basierend auf Plausibilitätsprüfungen oder unter der Annahme, dass das Fahrzeug vorrangig vorwärts fährt.

Auch die Erkennung von unterschiedlichen Raddurchmessern kann die Auswahl der möglichen Radpositionen einzuschränken. Speziell sogenannte Liftachsen haben in den USA zu 90 % kleinere Räder als z.B. die Räder der angetriebenen Achsen. Auch bei landwirtschaftlichen Fahrzeugen wie Traktoren können dadurch die Radpositionen zumindest hinsichtlich der Vorder- bzw. Hinterachse bestimmt werden, sofern eine Unterscheidung nach Raddurchmesser möglich ist. Dies ist mit der oben beschriebenen Intensitätsmessung nicht möglich. Nachteilig bei der Intensitätsmessung ist ferner, dass hierfür eine spezielle Sende- und Empfangsvorrichtung sowie eine Auswerteeinheit erforderlich sind.

Der vorliegenden Erfindung liegt daher die Aufgabe zugrunde, eine Zuordnung von Rädern zu ermöglichen, die mit geringem technischen Aufwand erreicht wird.

Diese Aufgabe wird erfindungsgemäß durch ein Verfahren nach Anspruch 1 und eine Vorrichtung nach Anspruch 7 gelöst. Vorteilhafte Aus- und Weiterbildungen, welche einzeln oder in Kombination miteinander eingesetzt werden können, sind Gegenstand der abhängigen Ansprüche.

In einem ersten Aspekt der Erfindung wird ein Verfahren zur Zuordnung eines Fahrzeugrads zu Achsen mit unterschiedlichen Radgrößen mit folgenden Verfahrensschritten vorgeschlagen:

- Messung der Beschleunigung $a_r$, die ein Beschleunigungssensor einer Radelektronik in einem Rad erfährt,
- Übermittlung des gemessenen Beschleunigungswerts $a_r$ an eine Auswerteeinheit,
- Vergleich des gemessenen Beschleunigungswerts $a_r$ mit einem für ein Standardrad in einem Speicher hinterlegten Standardwert durch die Auswerteeinheit; und
- Zuordnung des Fahrzeugrads zu einer Achse durch die Auswerteeinheit in Abhängigkeit von dem Vergleichsergebnis.

Die Zuordnung eines Rads zu einer Achse mit zugehörigen Fahrzeugrädern erfolgt auf Basis der Umdrehungsgeschwindigkeit des Rads. Ein Rad, das einen kleineren Durchmesser aufweist dreht sich bei gleicher Fahrgeschwindigkeit schneller als ein größeres Rad. Die unterschiedlichen Größen haben im Fahrbetrieb somit unterschiedliche Beschleunigungen zur Folge. Diese werden durch die Beschleunigungssensoren in der Radelektronik, die auch unter der Bezeichnung Wheel Unit (WU) bekannt ist, gemessen. Dabei wird der Betrag der Radialbeschleunigung $a_r$ der Radelektronik am Felgenumfang während der Fahrt gemessen und an eine Auswerteeinheit übermittelt. In der Auswerteeinheit werden die jeweiligen Beschleunigungswerte mit einem Standardwert, der für Standardräder hinterlegt ist, verglichen. Damit ist, basierend auf der Beschleunigung, eine Zuordnung der Achsen möglich, die Normalachsen von Liftachsen unterscheidet.

In einer bevorzugten Ausgestaltung der Erfindung wird die Radelektronik des Rads einer Achse mit kleineren Radgrößen zugeordnet, wenn das Vergleichsergebnis ergibt, dass der gemessene Beschleunigungswert $a_r$ größer ist als der zum Vergleich herangezogene Standardwert.

In einer weiteren bevorzugten Ausgestaltung der Erfindung wird die Radelektronik des Rads einer Achse mit einer Standard-Radgröße zugeordnet, wenn das Vergleichsergebnis ergibt, dass der gemessene Beschleunigungswert $a_r$ kleiner als der zum Vergleich herangezogene Standardwert ist.

In einer weiteren bevorzugten Ausgestaltung der Erfindung sind in dem Speicher Standardwerte für verschiedene Standardräder hinterlegt.

Zweckmäßigerweise sind in dem Speicher Standardwerte hinterlegt, bei denen äußere physikalische Rahmenbedingungen berücksichtigt sind.

Es hat sich bewährt, dass es sich bei den physikalischen Rahmenbedingungen um die Umgebungstemperatur, die Radtemperatur, die Fahrzeuggeschwindigkeit und/oder den Reifenluftdruck handelt.

In einem zweiten Aspekt der Erfindung wird eine Vorrichtung zur Zuordnung eines Fahrzeugrads zu Achsen mit unterschiedlichen Radgrößen mit folgenden Merkmalen vorgeschlagen:

- eine Kommunikationseinrichtung zum Empfang von gemessenen und übermittelten Beschleunigungswerten $a_r$, und

- eine Auswerteeinheit zur Durchführung eines Vergleichs zwischen von der Kommunikationseinrichtung an die Auswerteinheit übermittelten Beschleunigungswert $a_r$ mit einem gespeicherten Standardbeschleunigungswert, wobei in Abhängigkeit von dem Vergleichsergebnis das Fahrzeugrad zu einer Achse durch die Auswerteeinheit zuordenbar ist.

Weitere Einzelheiten und Vorteile der Erfindung werden in Bezugnahme auf die beigefügten Abbildungen erläutert.

Darin zeigen schematisch:

Fig. 1    ein Ablaufdiagramm für Verfahrensschritte zur Zuordnung der Radelektroniken;

Fig. 2    ein Blockschaltbild einer Vorrichtung zur Zuordnung der Radelektroniken; und

Fig. 3    ein Fahrzeugrad mit einer Radelektronik.

Bei der nachfolgenden Beschreibung einer bevorzugten Ausführungsform der vorliegenden Erfindung bezeichnen gleiche Bezugszeichen gleiche oder vergleichbare Komponenten.

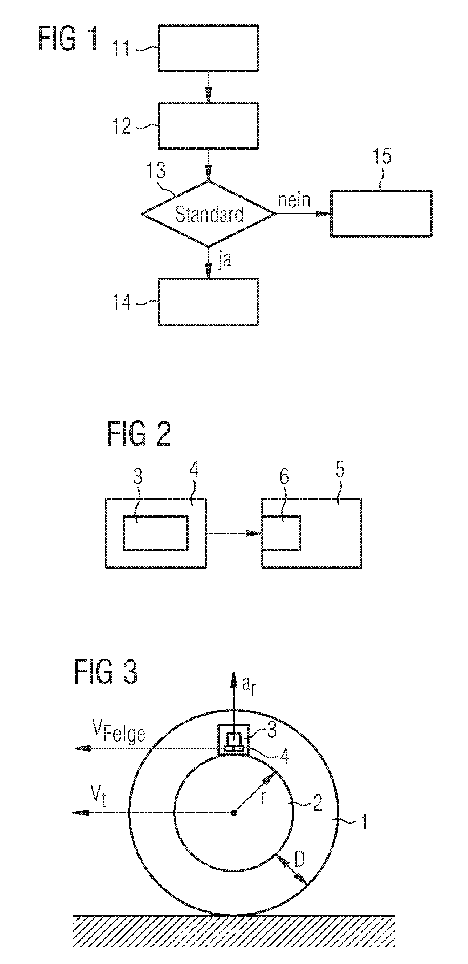

In Figur 1 sind unter Bezugnahme auf die Vorrichtung gemäß Figur 2 die prinzipiellen Verfahrensschritte zur Zuordnung von Radelektroniken 4 schematisch dargestellt. In einem ersten Verfahrensschritt 11 erfolgt eine Messung der Beschleunigung $a_r$, die ein Beschleunigungssensor 3 einer Radelektronik 4 in einem Rad 1 erfährt. Im nächsten Verfahrensschritt 12 erfolgt eine Übermittlung des gemessenen Beschleunigungswerts $a_r$ an eine Auswerteeinheit 5. Im darauffolgenden Verfahrensschritt 13 wird ein Vergleich des gemessenen Beschleunigungswerts $a_r$ mit einem für ein Standardrad in einem Speicher hinterlegten Standardwert durch die Auswerteeinheit 5 durchgeführt. Schließlich erfolgt im letzten Verfahrensschritt 14, 15 die Zuordnung des Fahrzeugrads 1 zu einer Achse durch die Auswerteeinheit 5 in Abhängigkeit von dem Vergleichsergebnis. Dabei erfolgt die Zuordnung 14, 15 beispielsweise in der Form, dass bei einem positiven Vergleich, in der Figur mit "ja" gekennzeichnet, eine Übereinstimmung mit einem Standardrad 1 festgestellt wird und bei einem negativen Vergleich, in der Figur mit "nein" gekennzeichnet, eine Abweichung von einem Standardrad festgestellt wird.

Figur 2 zeigt schematisch den Aufbau der Vorrichtung zur Zuordnung der Radelektroniken 4. Ein Beschleunigungssensor 3, der in einer Radelektronik 4 integriert ist, misst die jeweiligen Beschleunigungen $a_r$. Die Beschleunigungs-Signale werden anschließend an eine Kommunikationseinrichtung 6 gesendet, von der die Signale einer Auswerteeinheit 5 zugeführt werden. Die Kommunikationseinrichtung 6 kann in der Auswerteeinheit 5 integriert sein. Diese Auswerteeinheit 5 ist typischerweise fahrzeugseitig angeordnet. In der Auswerteinheit 5 wird schließlich ein Vergleich zwischen dem übermittelten Beschleunigungswert $a_r$ und einem vorab hinterlegten Standardwert durchgeführt. Damit ist, basierend auf der Beschleunigung $a_r$, eine Zuordnung von Achsen mit unterschiedlichen Radgrößen möglich. Kleinere Radgrößen werden zum Beispiel bei Liftachsen bei LKWs eingesetzt und durch die vorliegenden Erfindung entsprechend zugeordnet.

Figur 3 zeigt schematisch ein Fahrzeugrad 1 mit einer Radelektronik 4 und einem integrierten Beschleunigungssensor 3, die auf einer Felge 2 angeordnet sind. Ferner ist der Felgenradius r und der Abstand D zwischen dem Außenradius der Felge 2 und dem Umfang des Fahrzeugrads 1 dargestellt. Die Radialbeschleunigung $a_r$ der Radelektronik 4 wird am Felgenumfang gemessen.

Die Zuordnung eines Rads 1 zu einer Achse mit zugehörigen Fahrzeugrädern 1 erfolgt auf Basis der Umdrehungsgeschwindigkeit des Rads 1. Ein Rad 1, das einen kleineren Durchmesser aufweist, dreht sich bei gleicher Fahrgeschwindigkeit schneller als ein größeres Rad 1. Die unterschiedlichen Größen haben im Fahrbetrieb auch unterschiedliche Beschleunigungen $a_r$ zur Folge. Diese werden durch die Beschleunigungssensoren 3 in der Radelektronik 4, die auch unter der Bezeichnung Wheel Unit (WU) bekannt ist, gemessen. Dabei wird der Betrag der Radialbeschleunigung $a_r$ der Radelektronik 4 am Felgenumfang während der Fahrt gemessen und an die Auswerteeinheit 5 übermittelt.

Weiterhin ist die Fahrzeuggeschwindigkeit $v_t$ sowie die Geschwindigkeit $v_{Felge}$ der Radelektronik an der Felge dargestellt. Die Radialbeschleunigung $a_r$ zu Grunde legend kann folgender Zusammenhang hergestellt werden:

$$a_r = r\,\omega^2 = v^2_{Felge}/r = r(v_t^2/(r+D)^2)$$

Die Größe $v_t$ ist dabei die Fahrzeuggeschwindigkeit, die auf einem in Fahrzeugelektroniken üblichen CAN-BUS hinterlegt ist und dort abgegriffen wird. Die weiteren Größen sind r = Felgenradius, D = Abstand zwischen dem Außenradius der Felge 2 und dem Radumfang, d.h. dem Außenumfang des Rads, sowie $v_{Felge}$ = die Geschwindigkeit der Radelektronik 4 an der Felge 2.

Hieraus kann der Faktor B ermittelt werden, der eine Kenngröße für die Radgeometrie darstellt.

$$Bv_t{}^2 = r(v_t{}^2/(r+D)^2) \Rightarrow B = r/(r+D)^2$$

wobei B aus $B = a_r/v_t{}^2$ bekannt ist.

Nimmt man an, dass die Radhöhe in einem bestimmten Verhältnis zum Felgenradius zwischen 0 und 0,5 steht, so ergibt sich für den Faktor B ein Wert von $1/(2,25r)$ bis $1/r$.

Die vorliegende Erfindung eignet sich besonders für die Bestimmung von Liftachsen für LKWs.

## Patentansprüche

1. Verfahren zur Zuordnung eines Fahrzeugrads (1) zu Achsen mit unterschiedlichen Radgrößen mit folgenden Verfahrensschritten:

   - Messung der Beschleunigung $a_r$, die ein Beschleunigungssensor (3) einer Radelektronik (4) in einem Rad (1) erfährt,
   - Übermittlung des gemessenen Beschleunigungswerts $a_r$ an eine Auswerteeinheit (5),
   - Vergleich des gemessenen Beschleunigungswerts $a_r$ mit einem für ein Standardrad in einem Speicher hinterlegten Standardwert durch die Auswerteeinheit (5); und
   - Zuordnung des Fahrzeugrads (1) zu einer Achse durch die Auswerteeinheit (5) in Abhängigkeit von dem Vergleichsergebnis.

2. Verfahren nach Anspruch 1, wobei die Radelektronik (4) des Rads (1) einer Achse mit kleineren Radgrößen zugeordnet wird, wenn das Vergleichsergebnis ergibt, dass der gemessene Beschleunigungswert $a_r$ größer ist als der zum Vergleich herangezogene Standardwert.

3. Verfahren nach Anspruch 1, wobei die Radelektronik (4) des Rads (1) einer Achse mit Standard-Radgrößen, wenn das Vergleichsergebnis ergibt, dass der gemessene Beschleunigungswert $a_r$ kleiner ist als der zum Vergleich herangezogene Standardwert.

4. Verfahren nach Anspruch 1 bis 3, wobei in dem Speicher Standardwerte für verschiedene Standardräder hinterlegt sind.

5. Verfahren nach einem der vorherigen Ansprüche, wobei in dem Speicher Standardwerte hinterlegt sind, bei denen äußere physikalische Rahmenbedingungen berücksichtigt sind.

6. Verfahren nach einem der vorherigen Ansprüche, wobei es sich bei den physikalischen Rahmenbedingungen um die Umgebungstemperatur, die Radtemperatur, die Fahrzeuggeschwindigkeit und/oder den Reifenluftdruck handelt.

7. Vorrichtung zur Zuordnung eines Fahrzeugrads (1) zu Achsen mit unterschiedlichen Radgrößen mit folgenden Merkmalen:

   - eine Kommunikationseinrichtung (6) zum Empfang von gemessenen und übermittelten Beschleunigungswerten $a_r$, und
   - eine Auswerteeinheit (5) zur Durchführung eines Vergleichs zwischen von der Kommunikationseinrichtung (6) an die Auswerteinheit (5) übermittelten Beschleunigungswert $a_r$ mit einem gespeicherten Standardbeschleunigungswert, wobei in Abhängigkeit von dem Vergleichsergebnis das Fahrzeugrad (1) zu einer Achse durch die Auswerteeinheit (5) zuordenbar ist.

**FIG 1**

**FIG 2**

**FIG 3**

Europäisches
Patentamt

European
Patent Office

Office européen
des brevets

**EUROPÄISCHER RECHERCHENBERICHT**

Nummer der Anmeldung

EP 08 10 5362

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 806 306 A (CONTINENTAL AG [DE]) 12. November 1997 (1997-11-12) * Spalte 5, Zeile 24 - Zeile 28 * * Spalte 7, Zeile 48 - Spalte 10, Zeile 51 * * Abbildung 2 * ----- | 1-7 | INV. B60C23/04 |
| X | DE 10 2005 057305 A1 (BAYERISCHE MOTOREN WERKE AG [DE]) 14. Juni 2007 (2007-06-14) * Ansprüche 1-4 * * Abbildung 1 * ----- | 1-7 | |
| X | DE 101 44 360 A1 (SIEMENS AG [DE]) 3. April 2003 (2003-04-03) * Spalte 2 - Spalte 7 * * Abbildungen 1-5 * ----- | 1-7 | |

**RECHERCHIERTE SACHGEBIETE (IPC)**

B60C

Der vorliegende Recherchenbericht wurde für alle Patentansprüche erstellt

| Recherchenort | Abschlußdatum der Recherche | Prüfer |
|---|---|---|
| München | 9. Januar 2009 | Billen, Karl |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 08 10 5362

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-01-2009

| Im Recherchenbericht angeführtes Patentdokument | Datum der Veröffentlichung | Mitglied(er) der Patentfamilie | | Datum der Veröffentlichung |
|---|---|---|---|---|
| EP 0806306 A | 12-11-1997 | AT | 246607 T | 15-08-2003 |
| | | CA | 2204817 A1 | 09-11-1997 |
| | | DE | 19618658 A1 | 13-11-1997 |
| | | ES | 2206626 T3 | 16-05-2004 |
| | | PT | 806306 T | 31-12-2003 |
| | | US | 5808190 A | 15-09-1998 |
| DE 102005057305 A1 | 14-06-2007 | KEINE | | |
| DE 10144360 A1 | 03-04-2003 | FR | 2829426 A1 | 14-03-2003 |
| | | US | 2003076222 A1 | 24-04-2003 |

EPO FORM P0461

Für nähere Einzelheiten zu diesem Anhang : siehe Amtsblatt des Europäischen Patentamts, Nr.12/82